# EUROPEAN PATENT APPLICATION

(11) **EP 4 683 402 A1**
(43) Date of publication of application: **21.01.2026**
(21) Application number: 24778220.4
(22) Date of filing: 29.03.2024
(51) Int. Cl.: H04W 56/00

(54) **COMMUNICATION METHOD AND RELATED APPARATUS**

(30) Priority: 31.03.2023 CN 202310353326
(71) Applicant: Huawei Technologies Co., Ltd., Shenzhen, Guangdong 518129 (CN)
(72) Inventor: LI, Xinxian, Shenzhen, Guangdong 518129 (CN); PENG, Jinlin, Shenzhen, Guangdong 518129 (CN); WANG, Yi, Shenzhen, Guangdong 518129 (CN); HUANG, Xiuxuan, Shenzhen, Guangdong 518129 (CN)
(74) Representative: Goddar, Heinz J.
(86) International application number: PCT/CN2024/084754
(87) International publication number: WO 2024/199434

(57) **Abstract**

This application discloses a communication method. The communication method specifically includes: A terminal receives a first synchronization signal and physical broadcast channel block, where the first synchronization signal and physical broadcast channel block is located at an overlapping part between a first frequency band and a second frequency band. The first synchronization signal and physical broadcast channel block indicates a first time-frequency resource of a first cell, and the first time-frequency resource is located at the overlapping part between the first frequency band and the second frequency band. The terminal obtains indication information based on the first time-frequency resource, where the indication information indicates that a carrier corresponding to the first cell belongs to the first frequency band and the second frequency band. According to the communication method, a network device can configure at least one cell of the second frequency band by using the first frequency band, so that a terminal supporting the second frequency band can access the network device.

## Description

This application claims priority to Chinese Patent Application No. 202310353326.1, filed with the China National Intellectual Property Administration on March 31, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

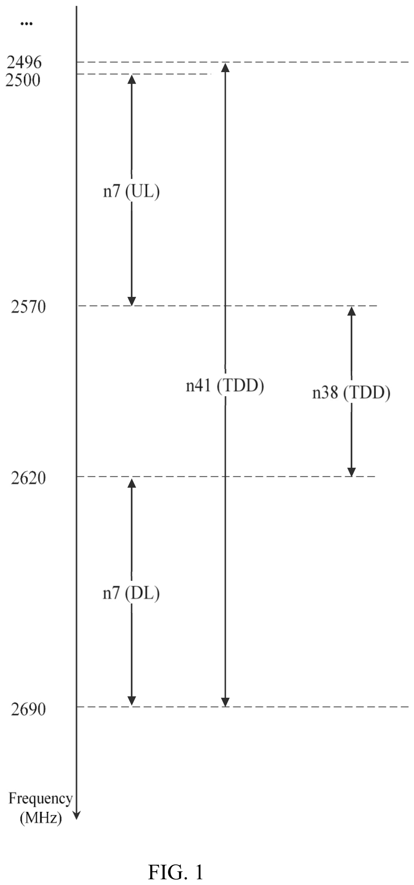

A frequency band (frequency band) is a frequency range, and has an upper boundary frequency and a lower boundary frequency. In a current new radio (New radio, NR) wireless communication technology, a plurality of frequency bands are defined in spectrum resources of about 2.6 GHz. For example, as shown in FIG. 1, 2500 MHz to 2570 MHz is defined as an uplink part of an n7 frequency band (that is, used by a terminal to communicate with a network device), and 2620 MHz to 2690 MHz is defined as a downlink part of the n7 frequency band (that is, used by a network device to communicate with a terminal). The n7 frequency band is also a typical frequency division duplex (frequency division duplex, FDD) frequency band (or referred to as a symmetric spectrum). For another example, 2570 MHz to 2620 MHz is defined as an n38 frequency band, 2496 MHz to 2690 MHz is defined as an n41 frequency band, and both n38 and n41 are typical time division duplex (time division duplex, TDD) frequency bands (or referred to as asymmetric spectra).

In the spectrum resources of about 2.6 GHz, different network operators may be authorized to use different frequency bands. For example, some network operators are authorized to use the n7 frequency band and the n38 frequency band, but are not authorized to use the n41 frequency band. These network operators usually can use the spectrum resources of about 2.6 GHz only by using the n7 frequency band and the n38 frequency band.

However, there are various types of terminals in an existing network. Some terminals support the n41 frequency band but do not support the n38 frequency band and/or the n7 frequency band. In this case, these terminals cannot access cells deployed by a network operator on the n38 frequency band and/or the n7 frequency band. Consequently, these terminals may fail to access the network. In addition, resource utilization of the cells deployed by the network operator on the n38 frequency band and/or the n7 frequency band may be low.

### SUMMARY

This application provides a communication method and a related apparatus, to improve network resource utilization.

According to a first aspect, a communication method is provided. The method may be applied to a terminal or an apparatus or a chip in the terminal. The following uses the terminal as an example to describe the method. The terminal receives a first synchronization signal and physical broadcast channel block (synchronization signal and physical broadcast channel block, SSB), where the first SSB is located at an overlapping part between a first frequency band and a second frequency band. The first SSB indicates a first time-frequency resource of a first cell, and the first time-frequency resource is located at the overlapping part between the first frequency band and the second frequency band. The terminal obtains indication information based on the first time-frequency resource, where the indication information indicates that a carrier corresponding to the first cell belongs to the first frequency band and the second frequency band.

According to the method provided in the first aspect, an example beneficial effect includes the following: A network device can configure at least one cell of the second frequency band by using the first frequency band, so that a terminal supporting the second frequency band can access the network device.

In a possible design, the terminal specifically receives downlink control information (downlink control information, DCI) on the first time-frequency resource, where the DCI indicates a time domain resource and/or a frequency domain resource carrying system information of the first cell. The terminal obtains the system information based on the DCI, where the system information includes the indication information.

In a possible design, the terminal may further obtain an initial bandwidth part (bandwidth part, BWP) of the first cell based on the first time-frequency resource, where the initial BWP is located at the overlapping part between the first frequency band and the second frequency band. According to this design, an example beneficial effect includes the following: The network device can configure at least one initial BWP of the second frequency band by using the first frequency band, so that a terminal supporting the second frequency band can access the network device by using the initial BWP.

In a possible design, the terminal may access the first cell based on the indication information.

In a possible design, the indication information includes a frequency band list, and the frequency band list includes the first frequency band and the second frequency band. The terminal may specifically determine a 1^{st} frequency band that the terminal is able to support in the frequency band list, and access the first cell through the 1^{st} frequency band that the terminal is able to support. According to this design, an example beneficial effect includes the following: When the network device knows a frequency band capability supported by the terminal, the network device can control access by the terminal device by configuring an arrangement order of frequency bands in the frequency band list, so that a quantity of terminals gaining access from different frequency bands or traffic distribution on different frequency bands can be balanced.

In a possible design, the first frequency band is an n38 frequency band or an n7 frequency band, and the second frequency band is an n41 frequency band. In this way, the network device can deploy and use the n41 frequency band by using the n38 frequency band and/or the n7 frequency band, thereby improving network resource utilization.

In a possible design, the first time-frequency resource includes a first control resource set (control resource set, CORESET).

According to a second aspect, a communication method is provided. The method may be applied to a network device or an apparatus or a chip in the network device. The following uses the network device as an example to describe the method. The network device sends a first SSB, where the first SSB is located at an overlapping part between a first frequency band and a second frequency band. The first SSB indicates a first time-frequency resource of a first cell, and the first time-frequency resource is located at the overlapping part between the first frequency band and the second frequency band. The network device sends, on the first time-frequency resource, information about a time domain resource and/or a frequency domain resource carrying indication information, where the indication information indicates that a carrier corresponding to the first cell belongs to the first frequency band and the second frequency band.

In a possible design, that the network device sends, on the first time-frequency resource, the information about the time domain resource and/or the frequency domain resource carrying the indication information includes: The network device sends DCI on the first time-frequency resource, where the DCI indicates a time domain resource and/or a frequency domain resource carrying system information of the first cell, and the system information includes the indication information.

In a possible design, the network device sends, on the first time-frequency resource, information about a time domain resource and/or a frequency domain resource carrying configuration information of an initial BWP of the first cell, where the initial BWP is located at the overlapping part between the first frequency band and the second frequency band.

In a possible design, the indication information includes a frequency band list, and the frequency band list includes the first frequency band and the second frequency band.

In a possible design, the first frequency band is an n38 frequency band or an n7 frequency band, and the second frequency band is an n41 frequency band.

According to a third aspect, a communication method is provided. The method may be applied to a terminal or an apparatus or a chip in the terminal. The following uses the terminal as an example to describe the method. The terminal receives BWP configuration information of a first cell from a network device, where the BWP configuration information is used to configure a first downlink BWP, and the first downlink BWP belongs to a second frequency band. In a frequency range of the first downlink BWP, a third frequency band used for downlink communication exists, but a third frequency band used for uplink communication does not exist, the second frequency band and the third frequency band have an overlapping part, the third frequency band is an FDD frequency band, and the second frequency band is a TDD frequency band.

According to the method provided in the third aspect, an example beneficial effect includes the following: Because the third frequency band used for uplink communication does not exist in the frequency range of the first downlink BWP, interference from uplink communication on the third frequency band to downlink communication of the terminal can be reduced. In addition, compared with an implementation in which it is constrained that neither the third frequency band used for uplink communication nor the third frequency band used for downlink communication can exist in the frequency range of the first downlink BWP, in the method provided in the third aspect, the third frequency band used for downlink communication is allowed to exist in the frequency range of the first downlink BWP. This not only improves configuration flexibility of the first downlink BWP, but also may increase a bandwidth of the first downlink BWP, thereby improving spectrum utilization.

According to a fourth aspect, a communication method is provided. The method may be applied to a network device or an apparatus or a chip in the network device. The following uses the network device as an example to describe the method. The network device sends BWP configuration information of a first cell, where the BWP configuration information is used to configure a first downlink BWP, and the first downlink BWP belongs to a second frequency band. In a frequency range of the first downlink BWP, a third frequency band used for downlink communication exists, but a third frequency band used for uplink communication does not exist, the second frequency band and the third frequency band have an overlapping part, the third frequency band is a frequency division multiplexing FDD frequency band, and the second frequency band is a time division multiplexing TDD frequency band.

In a possible design of the third aspect or the fourth aspect, the terminal may send capability information to the network device, where the capability information indicates that the terminal supports an asymmetric uplink BWP and downlink BWP configuration. The network device correspondingly receives the capability information from the terminal.

In a possible design of the third aspect or the fourth aspect, the BWP configuration information is further used to configure a first uplink BWP, a BWP identifier of the first uplink BWP is the same as a BWP identifier of the first downlink BWP, and the first uplink BWP also belongs to the second frequency band.

In a possible design of the third aspect or the fourth aspect, in a frequency range of the first uplink BWP, the third frequency band used for uplink communication exists, but the third frequency band used for downlink communication does not exist. According to this design, an example beneficial effect includes the following: Because the third frequency band used for uplink communication does not exist in the frequency range of the first downlink BWP, interference from uplink communication on the third frequency band to downlink communication of the terminal can be reduced. In addition, compared with an implementation in which it is constrained that neither the third frequency band used for uplink communication nor the third frequency band used for downlink communication can exist in the frequency range of the first downlink BWP, in this design, the third frequency band used for downlink communication is allowed to exist in the frequency range of the first downlink BWP. This not only improves configuration flexibility of the first downlink BWP, but also may increase a bandwidth of the first downlink BWP, thereby improving spectrum utilization.

In a possible design of the third aspect or the fourth aspect, a center frequency and/or a bandwidth of the first uplink BWP are/is different from a center frequency and/or a bandwidth of the first downlink BWP. According to this design, an example beneficial effect includes the following: When configuring an uplink BWP and a downlink BWP for the terminal, the network device no longer needs to ensure that an uplink BWP and a downlink BWP that have a same BWP identifier have a same center frequency and/or bandwidth, thereby improving BWP configuration flexibility, especially BWP configuration flexibility on a TDD frequency band. This configuration flexibility helps improve spectrum resource utilization.

In a possible design of the third aspect or the fourth aspect, the second frequency band is an n41 frequency band, and the third frequency band is an n7 frequency band.

According to a fifth aspect, a communication method is provided. The method may be applied to a terminal or an apparatus or a chip in the terminal. The following uses the terminal as an example to describe the method. The terminal receives configuration information from a network device, where the configuration information is used to configure a first carrier and a second carrier. When a difference between a starting frequency of the second carrier and a starting frequency of the first carrier is a positive value, the difference between the starting frequency of the second carrier and the starting frequency of the first carrier is equal to n times a frequency resource size corresponding to a resource block group (resource block group, RBG) size of the first carrier, where n is a positive integer; or the difference between the starting frequency of the second carrier and the starting frequency of the first carrier is equal to a sum of X times the frequency resource size corresponding to the RBG size of the first carrier and a frequency resource size corresponding to Y resource blocks (resource block, RB) of the first carrier, where X and Y are positive integers.

According to the method provided in the fifth aspect, an example beneficial effect includes the following: The first carrier and the second carrier are aligned at an RBG boundary of an overlapping part, so that generation of a resource fragment that cannot be used by both the first carrier and the second carrier is reduced, thereby reducing a resource waste or a user peak rate loss. In addition, the first carrier and the second carrier are aligned at the RBG boundary of the overlapping part, so that multi-user multiple-input multiple-output (multi-user multiple-input multiple-output, MU-MIMO) communication between a terminal using the first carrier and a terminal using the second carrier can also be supported, thereby further increasing a cell capacity.

According to a sixth aspect, a communication method is provided. The method may be applied to a network device or an apparatus or a chip in the network device. The following uses the network device as an example to describe the method. The network device sends configuration information, where the configuration information is used to configure a first carrier and a second carrier. When a difference between a starting frequency of the second carrier and a starting frequency of the first carrier is a positive value, the difference between the starting frequency of the second carrier and the starting frequency of the first carrier is equal to n times a frequency resource size corresponding to an RBG size of the first carrier, where n is a positive integer; or the difference between the starting frequency of the second carrier and the starting frequency of the second carrier is equal to a sum of X times the frequency resource size corresponding to the RBG size of the first carrier and a frequency resource size corresponding to Y RBs of the first carrier, where X and Y are positive integers.

In a possible design of the fifth aspect or the sixth aspect, when the difference between the starting frequency of the second carrier and the starting frequency of the first carrier is a negative value, an absolute value of the difference between the starting frequency of the second carrier and the starting frequency of the first carrier is equal to n times a frequency resource size corresponding to an RBG size of the second carrier; or the absolute value of the difference between the starting frequency of the second carrier and the starting frequency of the second carrier is equal to a sum of X times the frequency resource size corresponding to the RBG size of the second carrier and a frequency resource size corresponding to Y RBs of the second carrier.

According to a seventh aspect, a communication method is provided. The method may be applied to a network device or an apparatus or a chip in the network device. The following uses the network device as an example to describe the method. The network device switches a terminal from a second BWP to a third BWP based on uplink-downlink configuration information of a first cell and uplink-downlink configuration information of a second cell, where the second BWP and the third BWP belong to the second cell. The second BWP and a first BWP of the first cell have an overlapping part, the third BWP and the first BWP do not have an overlapping part, and the first BWP, the second BWP, and the third BWP are all located on a TDD frequency band.

According to the method provided in the seventh aspect, an example beneficial effect includes the following: The network device can determine, based on the uplink-downlink configuration information of the first cell and the uplink-downlink configuration information of the second cell, to switch a downlink BWP of the second cell in a timely manner, thereby reducing interference between uplink transmission of the first cell and downlink transmission of the second cell.

In a possible design, the uplink-downlink configuration information of the first cell is different from the uplink-downlink configuration information of the second cell.

In a possible design, the first cell and the second cell belong to different operators.

In a possible design, when determining that the uplink-downlink configuration information of the first cell is different from the uplink-downlink configuration information of the second cell, the network device may switch the terminal from a second downlink BWP of the second cell to a third downlink BWP of the second cell. The third downlink BWP of the second cell does not overlap the first BWP in frequency domain.

In a possible design, the network device may switch the terminal from the second downlink BWP of the second cell to the third downlink BWP of the second cell before an uplink transmission time unit (for example, an uplink transmission slot or an uplink transmission subframe) in the first BWP. For example, the network device may switch the terminal from the second downlink BWP of the second cell to the third downlink BWP of the second cell before a 1^{st} uplink transmission time unit in the first BWP. Alternatively, the network device may switch the terminal from the second downlink BWP of the second cell to the third downlink BWP of the second cell after a last downlink transmission time unit in the first BWP. Alternatively, the network device may switch the terminal from the second downlink BWP of the second cell to the third downlink BWP of the second cell in a transition time unit (for example, a special slot or a special subframe) from downlink to uplink in a time unit in the first BWP.

According to an eighth aspect, this application provides a communication apparatus. The apparatus includes a module configured to perform the methods in the first aspect to the seventh aspect and any method in any design thereof.

According to a ninth aspect, this application provides a communication apparatus, including a processor and a memory, where the processor is coupled to the memory, the memory stores program code, and the processor executes the program code, so that the communication apparatus performs the methods in the first aspect to the seventh aspect and any method in any design thereof.

According to a tenth aspect, this application provides a communication apparatus, including at least one processor and an interface. The interface is configured to: receive a signal from another communication apparatus different from the communication apparatus and transmit the signal to the processor, or send a signal from the processor to another communication apparatus different from the communication apparatus. The processor implements the methods in the first aspect to the seventh aspect and any method in any design thereof by using a logic circuit or code instructions.

In a possible design, the apparatus may be a chip or an integrated circuit in the terminal or the network device in the methods in the first aspect to the seventh aspect and any method in any design thereof.

Optionally, the communication apparatus may further include at least one memory, and the memory stores the code instructions.

According to an eleventh aspect, this application provides a communication apparatus. The apparatus has functions or operations for implementing any one of the methods in the first aspect to the seventh aspect and the method in any design thereof. The functions or the operations may be implemented by using hardware, or may be implemented by hardware executing corresponding software. The hardware or the software includes one or more units (modules) corresponding to the foregoing functions or operations, for example, a transceiver unit and a processing unit.

According to a twelfth aspect, this application provides a computer-readable storage medium, where the computer-readable storage medium stores computer program instructions, and when the computer program instructions are executed by a processor, the methods in the first aspect to the seventh aspect and any method in any design thereof are implemented.

According to a thirteenth aspect, this application provides a computer program product, where the computer program product includes program instructions, and when the program instructions are executed by a processor, the methods in the first aspect to the seventh aspect and any method in any design thereof are implemented.

According to a fourteenth aspect, this application further provides a chip. The chip is configured to implement the methods in the first aspect to the seventh aspect and any method in any design thereof.

According to a fifteenth aspect, this application provides a communication system. The communication system includes a terminal configured to perform the methods in the first aspect to the seventh aspect and any method in any design thereof, and a network device configured to perform the methods in the first aspect to the seventh aspect and any method in any design thereof.

### BRIEF DESCRIPTION OF DRAWINGS

With reference to the accompanying drawings, the following describes in detail the solutions provided in this application. Features or content denoted by dashed lines in the accompanying drawings may be understood as optional operations or optional structures in embodiments of this application.
FIG. 1 is a diagram of a frequency band definition;
FIG. 2 is a schematic flowchart of a method according to an embodiment of this application;
FIG. 3 is a diagram of a method according to an embodiment of this application;
FIG. 4 is a diagram of a method according to an embodiment of this application;
FIG. 5 is a diagram of a method according to an embodiment of this application;
FIG. 6 is a diagram of a method according to an embodiment of this application;
FIG. 7 is a diagram of a method according to an embodiment of this application;
FIG. 8 is a schematic flowchart of a method according to an embodiment of this application;
FIG. 9 is a diagram of a method according to an embodiment of this application;
FIG. 10 is a block diagram of a communication apparatus according to an embodiment of this application; and
FIG. 11 is a block diagram of an apparatus according to an embodiment of this application.

### DESCRIPTION OF EMBODIMENTS

To make the specific technical solutions and inventive objectives of the present invention clearer, the following provides further descriptions with reference to specific implementations and accompanying drawings.

First, some concepts in this application are described by using examples.

At least one carrier (carrier) may be deployed in a frequency band. The carrier may include an uplink (uplink, UL) carrier or a downlink (downlink, DL) carrier. The uplink carrier is used by a terminal to send a signal to a network device, and the downlink carrier is used by the network device to send a signal to the terminal. The uplink carrier and the downlink carrier may belong to different frequency resources (for example, implemented by using a frequency division multiplexing technology), or may belong to a same frequency resource (for example, implemented by using a non-frequency division multiplexing technology like space division multiplexing or time division multiplexing). In this application, "the uplink carrier and/or the downlink carrier" may be collectively referred to as a "carrier", and that the "carrier" is the uplink carrier and/or the downlink carrier may be determined with reference to a specific context.

A frequency domain resource of one cell may include only at least one downlink carrier. In this case, a carrier corresponding to the cell is the at least one downlink carrier. A frequency domain resource of one cell may alternatively include at least one downlink carrier and at least one uplink carrier. In this case, carriers corresponding to the cell are the at least one downlink carrier and the at least one uplink carrier. Therefore, a correspondence between the carrier and the cell may be simply described as follows: One cell corresponds to at least one downlink carrier, and one cell may correspond to at least one uplink carrier.

When a carrier corresponding to a cell belongs to a frequency band, the cell may be referred to as a cell of the frequency band.

One carrier may include at least one bandwidth part (bandwidth part, BWP). Therefore, the BWP may also be referred to as a carrier bandwidth part (carrier bandwidth part). The BWP includes a downlink BWP or an uplink BWP. The uplink BWP is used by the terminal to send a signal to the network device, and the downlink BWP is used by the network device to send a signal to the terminal. In this application, "the downlink BWP and/or the uplink BWP" may be collectively referred to as a "BWP". Whether the "BWP" is the uplink BWP and/or the downlink BWP may be determined with reference to a specific embodiment. Because there is a correspondence between a carrier and a cell, a BWP on the carrier may also be referred to as a BWP in the cell corresponding to the carrier, and may be further referred to as a BWP of the cell for short.

In one cell, the network device may configure at least one BWP for the terminal. The at least one BWP configured by the network device for the terminal may be referred to as a configured BWP of the terminal. The configured BWP of the terminal may include an initial BWP (Initial BWP) and a dedicated BWP (Dedicated BWP). The initial BWP is mainly used for communication transmission during initial access by the terminal, and the dedicated BWP is mainly used for signal transmission after the terminal is in a radio resource control (radio resource control, RRC) connected state. There is an activated BWP of the terminal in a cell in an activated state (which may also be referred to as an activated cell of the terminal), and the terminal may communicate with the network device by using the activated BWP in the activated cell. In one cell, the network device may activate only one of configured BWPs of the terminal, and the BWP may be referred to as the activated BWP of the terminal.

The BWP has a BWP size. The BWP size is a quantity of resource blocks (resource block, RB) included in the BWP. A resource scheduling unit is a resource block group (resource block group, RBG). An RBG is a set of at least one RB. The RBG has an RBG size. The RBG size is a quantity of RBs included in the RBG. One RB includes a positive integer of subcarriers, for example, 12 subcarriers. A subcarrier spacing (subcarrier spacing, SCS) of one RB may be 15 kHz, 30 kHz, 60 kHz, 120 kHz, 240 kHz, 480 kHz, or another value, for example, an integer multiple of 2.

In this application, "an RBG of a carrier or a BWP" is a unit for resource scheduling on the carrier or the BWP by the network device.

The RBG size is related to the BWP size. For example, a relationship between the RBG size and the BWP size may be shown in Table 1.

| BWP size | Configuration 1 (RBG size) | Configuration 2 (RBG size) |
|---|---|---|
| 1-36 | 2 | 4 |
| 37-72 | 4 | 8 |
| 73-144 | 8 | 16 |
| 145-275 | 16 | 16 |

It can be learned from Table 1 that a value set of the RBG size is {2, 4, 8, 16}. Table 1 may be preconfigured, for example, specified in a standard protocol. For example, the network device may configure one BWP for the terminal, and a BWP size of the BWP is 72 RBs. The network device may indicate the configuration 1 to the terminal. In this way, the terminal may determine, based on the preconfigured Table 1, that an RBG size configured by the network device for the terminal on the BWP is 4. The BWP may be located on a carrier configured by the network device for the terminal. Therefore, the RBG size configured by the network device for the terminal on the BWP may also be understood as an RBG size configured by the network device for the terminal on the carrier.

In an embodiment of this application, when a network operator is authorized to use a first frequency band but is not authorized to use a second frequency band, the operator may configure at least one cell of the second frequency band by using the first frequency band. The first frequency band and the second frequency band have an overlapping part in frequency domain.

In an embodiment of this application, as shown in FIG. 1, the first frequency band may be an n7 frequency band or an n38 frequency band, and the second frequency band may be an n41 frequency band.
(1) In a first implementation, the network device may send a first synchronization signal and physical broadcast channel block (synchronization signal and physical broadcast channel block, SSB) on the first frequency band. A cell associated with the first SSB is a first cell. A carrier corresponding to the first cell belongs to the first frequency band, and the first cell may be referred to as a cell of the first frequency band. Correspondingly, the terminal may receive the first SSB. The first SSB indicates a first time-frequency resource. For example, the first time-frequency resource may be a first control resource set (control resource set, CORESET) (for example, a CORESET0). For example, the terminal may parse a physical broadcast channel (physical broadcast channel, PBCH) included in the first SSB, to obtain master information block (master information block, MIB) information. Then, the terminal determines the first time-frequency resource based on the MIB information. The first time-frequency resource is located on the first frequency band.

The terminal may obtain a first initial (initial) bandwidth part (bandwidth part, BWP) of the first cell based on the first time-frequency resource. The first initial BWP is located on the first frequency band. For example, the terminal may receive second downlink control information (downlink control information, DCI) on the first time-frequency resource, where the second DCI indicates a time domain resource and/or a frequency domain resource carrying second system information (for example, a system information block 1 (system information block, SIB1)) of the first cell. The terminal obtains the second system information based on the second DCI. The second system information includes information indicating the first initial BWP of the first cell.

In this application, a cell associated with an SSB may be understood as that the terminal may obtain a physical cell identifier (physical cell identifier, PCI) of the cell by using the SSB. For example, the terminal may obtain the PCI of the cell based on a primary synchronization signal (primary synchronization signal, PSS) and a secondary synchronization signal (secondary synchronization signal, SSS) that are included in the SSB.

Alternatively, the network device may send a second SSB on the first frequency band. The second SSB may be located at the overlapping part between the first frequency band and the second frequency band. A cell associated with the second SSB is a second cell. A carrier corresponding to the second cell belongs to the second frequency band, and the second cell may be referred to as a cell of the second frequency band. From a perspective of the terminal, the second cell is a cell of the second frequency band. Correspondingly, the terminal may receive the second SSB.

A terminal supporting the second frequency band may obtain a second time-frequency resource based on the second SSB, and further obtain a second initial BWP of the second cell. The second initial BWP may include an initial uplink BWP and/or an initial downlink BWP. BWP identifiers (identifier, ID) of the initial uplink BWP and the initial downlink BWP may be consistent, but bandwidths and center frequencies thereof may be inconsistent. This initial BWP configuration may be referred to as an asymmetric initial uplink BWP and initial downlink BWP configuration.

The second time-frequency resource or the second initial BWP is located on the second frequency band. For example, the second time-frequency resource or the second initial BWP may be entirely located at the overlapping part between the first frequency band and the second frequency band. Optionally, the second time-frequency resource or the second initial BWP may alternatively be partially located at the overlapping part between the first frequency band and the second frequency band. In this case, a part that is of the second time-frequency resource or the second initial BWP and that is not located at the overlapping part may be located at an overlapping part between another frequency band (for example, a third frequency band) authorized to be used by the network operator and the second frequency band. Optionally, the second time-frequency resource or the second initial BWP may alternatively not be located at the overlapping part between the first frequency band and the second frequency band. In this case, the second time-frequency resource or the second initial BWP may be located at an overlapping part between another frequency band (for example, a third frequency band) authorized to be used by the network operator and the second frequency band.

The first frequency band and the third frequency band may be adjacent frequency bands in frequency domain. As shown in FIG. 1, the first frequency band may be the n38 frequency band, the second frequency band may be the n41 frequency band, and the third frequency band may be the n7 frequency band; or the first frequency band may be the n7 frequency band, the second frequency band may be the n41 frequency band, and the third frequency band may be the n38 frequency band.

In this way, a terminal that supports the second frequency band (especially a terminal that supports the second frequency band but does not support the first frequency band) can access the network device by using the second cell, thereby improving network resource utilization.

Because the second SSB is located at the overlapping part between the first frequency band and the second frequency band, locations of the first SSB and the second SSB in frequency domain may overlap, and a resource conflict may occur.

In an implementation, to reduce a resource conflict, the network device may configure that the locations of the first SSB and the second SSB do not overlap in frequency domain. Further, it may be configured that locations of the first time-frequency resource and the second time-frequency resource do not overlap in frequency domain. For example, it may be further configured that locations of the first initial BWP and the second initial BWP do not overlap in frequency domain.

In another implementation, the network device may deploy the first SSB and the second SSB in a time division multiplexing or space division multiplexing manner. In this way, even if the locations of the first SSB and the second SSB overlap in frequency domain, resource conflicts can be reduced. Further, the first time-frequency resource and the second time-frequency resource may be deployed in a time division multiplexing or space division multiplexing manner. For example, the first initial BWP and the second initial BWP may be further deployed in a time division multiplexing or space division multiplexing manner.

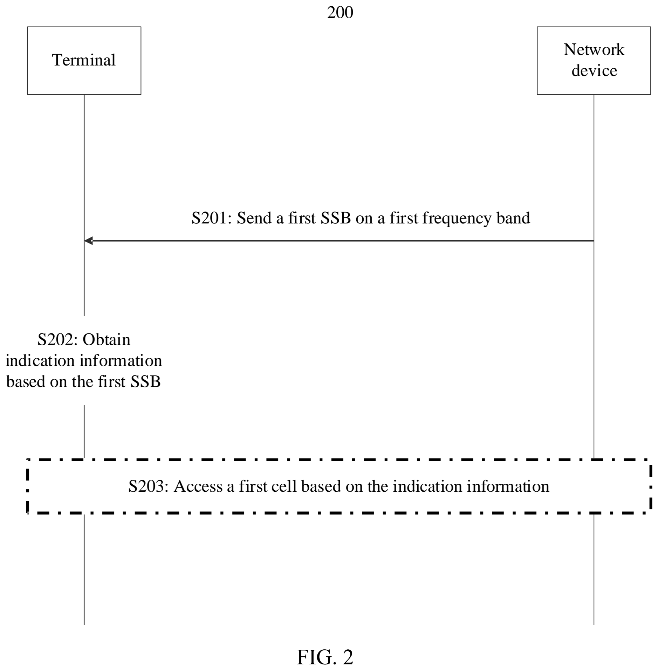

(2) In a second implementation, refer to a diagram of a communication method 200 provided in FIG. 2. The communication method 200 specifically includes the following steps.

S201: A network device sends a first SSB on a first frequency band.

The first SSB may be located at an overlapping part between the first frequency band and a second frequency band.

Correspondingly, a terminal receives the first SSB. The terminal may be a terminal supporting the first frequency band and/or the second frequency band.

S202: The terminal may obtain indication information based on the first SSB. The indication information indicates that a carrier corresponding to a first cell belongs to the first frequency band and the second frequency band.

The first cell is a cell associated with the first SSB.

The first SSB may indicate a first time-frequency resource of the first cell. For example, the first time-frequency resource may be located at the overlapping part between the first frequency band and the second frequency band. The first time-frequency resource may be a CORESET, for example, a CORESET0.

The terminal may obtain the indication information based on the first time-frequency resource. For example, the network device sends, on the first time-frequency resource, information about a time domain resource and/or a frequency domain resource carrying the indication information, and correspondingly, the terminal receives, on the first time-frequency resource, the information about the time domain resource and/or the frequency domain resource carrying the indication information. In an implementation, the terminal may receive DCI on the first time-frequency resource. The DCI indicates a time domain resource and/or a frequency domain resource carrying system information of the first cell (for example, system information 1 or a SIB1 of the first cell). The terminal obtains the system information based on the DCI. The system information includes the indication information (for example, a frequencyBandList information element).

For example, the terminal may further obtain an initial BWP of the first cell based on the first time-frequency resource. For example, the network device sends, on the first time-frequency resource, information about a time domain resource and/or a frequency domain resource carrying initial BWP configuration information of the first cell. Correspondingly, the terminal receives, on the first time-frequency resource, the information about the time domain resource and/or the frequency domain resource carrying the initial BWP configuration information of the first cell. In an implementation, the terminal may receive DCI on the first time-frequency resource. The DCI indicates a time domain resource and/or a frequency domain resource carrying system information of the first cell (for example, system information 1 or a SIB1 of the first cell). The terminal obtains the system information based on the DCI. The system information includes initial BWP configuration information of the first cell. For example, the initial BWP may be located at the overlapping part between the first frequency band and the second frequency band. The initial BWP may include an initial uplink BWP and/or an initial downlink BWP. BWP identifiers of the initial uplink BWP and the initial downlink BWP may be consistent, but bandwidths and center frequencies thereof may be inconsistent. This initial BWP configuration may be referred to as an asymmetric initial uplink BWP and initial downlink BWP configuration.

The time domain resource and/or the frequency domain resource carrying the indication information may be the same as or different from the time domain resource and/or the frequency domain resource carrying the initial BWP configuration information of the first cell. If the system information of the first cell that includes the indication information is referred to as first system information, and the system information of the first cell that includes the initial BWP configuration information of the first cell is referred to as second system information, the first system information and the second system information may be system information of a same first cell or system information of different first cells. If the DCI indicating the information about the time domain resource and/or the frequency domain resource carrying the first system information is referred to as first DCI, and the DCI indicating the information about the time domain resource and/or the frequency domain resource carrying the second system information is referred to as second DCI, the first DCI and the second DCI may be same DCI or different DCI.

Optionally, the communication method 200 may include S203: The terminal accesses a first cell based on the indication information.

The terminal may determine, based on the indication information, to access the first cell through the first frequency band or the second frequency band.

When the terminal determines to access the first cell through the first frequency band, from a perspective of the terminal, the first cell is a cell of the first frequency band. The terminal may communicate with the network device based on a related configuration (for example, a bandwidth configuration of a filter) corresponding to the first frequency band.

When the terminal determines to access the first cell through the second frequency band, from the perspective of the terminal, the first cell is a cell of the second frequency band. The terminal may communicate with the network device based on a related configuration (for example, a bandwidth configuration of a filter) corresponding to the first frequency band.

In an implementation, when the terminal supports both the first frequency band and the second frequency band, the terminal may choose to access the first cell through the first frequency band or the second frequency band. When the terminal supports the first frequency band but does not support the second frequency band, the terminal may determine to access the first cell through the first frequency band. When the terminal supports the second frequency band but does not support the first frequency band, the terminal may determine to access the first cell through the second frequency band.

For example, the indication information includes a frequency band list. The frequency band list includes the first frequency band and the second frequency band. The terminal determines a 1^{st} frequency band that the terminal is able to support in the frequency band list, and accesses the first cell through the 1^{st} frequency band that the terminal is able to support.

For example, in the frequency band list, there may be an arrangement order between the first frequency band and the second frequency band. For example, in the frequency band list, the first frequency band may appear before the second frequency band, or the first frequency band may appear after the second frequency band.

The terminal may choose to access the first cell through the first frequency band. In this case, the terminal supports the first frequency band (which may support the second frequency band or may not support the second frequency band), and the first frequency band appears before the second frequency band.

The terminal may choose to access the first cell through the second frequency band. In this case, the terminal supports the second frequency band (which may support the first frequency band or may not support the first frequency band), and the second frequency band appears before the first frequency band.

In an implementation, the network device can control access by the terminal device by configuring an arrangement order of frequency bands in the frequency band list, so that a quantity of terminals gaining access from different frequency bands or traffic distribution on different frequency bands can be balanced.

According to the method 200, a terminal that supports the second frequency band (especially a terminal that supports the second frequency band but does not support the first frequency band) can access the network device by using the first cell, thereby improving network resource utilization. In addition, in the method 200, the first cell may serve as a cell of the first frequency band and may serve as a cell of the second frequency band. The first cell serving as a cell of the first frequency band and the first cell serving as a cell of the second frequency band may share information such as the first SSB, the first time-frequency resource, a first initial BWP, or a cell selection parameter, an access control parameter, and channel configuration information related to initial access. Therefore, resource conflicts can be reduced, system resource overheads can be reduced, and a system capacity can be increased.

According to the method provided in the foregoing embodiment, when a network operator is authorized to use the first frequency band but is not authorized to use the second frequency band, the operator can configure at least one cell of the second frequency band by using the first frequency band, so that a terminal supporting the second frequency band can access the network device (for example, access the network device from a cell of the second frequency band).

In the foregoing embodiment, the terminal may establish a communication connection (for example, an RRC connection) to the network device by using the initial BWP.

In the first implementation (1) of the foregoing embodiment, the network device may determine that the terminal accesses the network device from the first frequency band. In this case, the terminal establishes a communication connection to the network device by using the first initial BWP. The network device may determine that the terminal accesses the network device from the second frequency band. In this case, the terminal establishes a communication connection to the network device by using a second initial BWP.

In the second implementation (2) of the foregoing embodiment, the network device may alternatively determine, with reference to a capability of the terminal, whether the terminal accesses the network device from the first frequency band or the second frequency band. For example, the network device may determine that the terminal accesses the network device from the first frequency band, and in this case, the terminal supports the first frequency band but does not support the second frequency band; or the network device may determine that the terminal accesses the network device from the first frequency band, and in this case, the terminal supports both the first frequency band and the second frequency band, and the first frequency band appears before the second frequency band in the frequency band list included in the indication information. For another example, the network device may determine that the terminal accesses the network device from the second frequency band, and in this case, the terminal supports the second frequency band but does not support the first frequency band; or the network device may determine that the terminal accesses the network device from the second frequency band, and in this case, the terminal supports both the first frequency band and the second frequency band, and the second frequency band appears before the first frequency band in the frequency band list included in the indication information.

When the network device determines that the terminal accesses the network device from the second frequency band, the network device may perform RRC configuration on the terminal by using an RRC message. The RRC configuration may include carrier configuration, dedicated BWP configuration, and the like.

In an embodiment of this application, the network device may send carrier configuration information or BWP configuration information of the first cell to the terminal. Correspondingly, the terminal may receive the carrier configuration information or the BWP configuration information of the first cell from the network device. The first cell is a cell of the second frequency band. The terminal may be a terminal supporting the second frequency band. An operator of the network device may be authorized to use the first frequency band and a third frequency band, and is not authorized to use the second frequency band. The terminal supporting the second frequency band may access the network device by using the method in the foregoing embodiment, or may access the network device by using another method. This is not limited in this application. For example, the first frequency band and the third frequency band may be adjacent frequency bands in frequency domain. The first frequency band and the second frequency band have an overlapping part. The third frequency band and the second frequency band have an overlapping part. The third frequency band may be an FDD frequency band, and the second frequency band may be a TDD frequency band.
(1) In a first implementation, the carrier configuration information of the first cell may be used to configure a first downlink carrier, and the first downlink carrier belongs to the second frequency band. In a frequency range of the first downlink carrier, a third frequency band used for downlink communication exists, but a third frequency band used for uplink communication does not exist.

The terminal may perform downlink communication with the network device on the first downlink carrier based on the carrier configuration information. Because the third frequency band used for uplink communication does not exist in the frequency range of the first downlink carrier, interference from uplink communication on the third frequency band to downlink communication of the terminal can be reduced. In addition, compared with an implementation in which it is constrained that neither the third frequency band used for uplink communication nor the third frequency band used for downlink communication can exist in the frequency range of the first downlink carrier, in the first implementation, the third frequency band used for downlink communication is allowed to exist in the frequency range of the first downlink carrier. This not only improves configuration flexibility of the first downlink carrier, but also may increase a bandwidth of the first downlink carrier, thereby improving spectrum utilization.

The carrier configuration information is further used to configure a first uplink carrier, a carrier index (index) of the first uplink carrier is the same as that of the first downlink carrier, and the first uplink carrier belongs to the second frequency band. In a frequency range of the first uplink carrier, a third frequency band used for uplink communication exists, but a third frequency band used for downlink communication does not exist.

The terminal may perform uplink communication with the network device on the first uplink carrier based on the carrier configuration information. Because the third frequency band used for downlink communication does not exist in the frequency range of the first uplink carrier, interference from downlink communication on the third frequency band to uplink communication of the terminal can be reduced. In addition, compared with an implementation in which it is constrained that neither the third frequency band used for downlink communication nor the third frequency band used for uplink communication can exist in the frequency range of the first uplink carrier, in the first implementation, the third frequency band used for uplink communication is allowed to exist in the frequency range of the first uplink carrier. This not only improves configuration flexibility of the first uplink carrier, but also may increase a bandwidth of the first uplink carrier, thereby improving spectrum utilization.

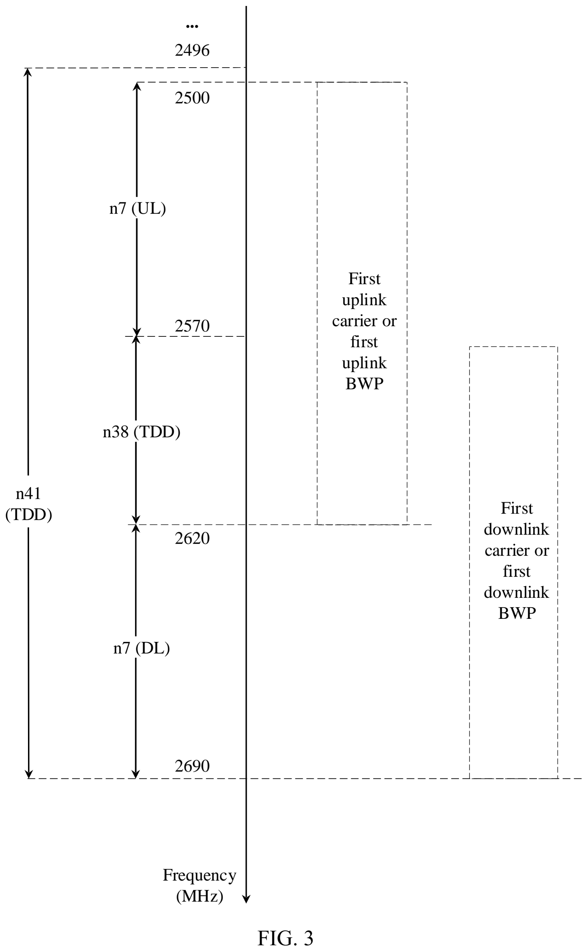

As shown in FIG. 3, center frequencies and/or bandwidths of the first uplink carrier and the first downlink carrier may be different. In other words, the first uplink carrier and the first downlink carrier are asymmetric uplink carrier and downlink carrier. In this implementation, when configuring an uplink carrier and a downlink carrier for the terminal, the network device no longer needs to ensure that an uplink carrier and a downlink carrier that have a same carrier identifier have a same center frequency and/or bandwidth, thereby improving carrier configuration flexibility, especially carrier configuration flexibility on a TDD frequency band. This configuration flexibility helps improve spectrum resource utilization of the second frequency band.

In the first implementation of this embodiment of this application, before the network device sends the carrier configuration information of the first cell to the terminal, the terminal may further send capability information to the network device, where the capability information indicates whether the terminal supports an asymmetric uplink carrier and downlink carrier configuration. The network device then determines, based on the capability information, whether to send the carrier configuration information of the first cell to the terminal. For example, the network device sends the carrier configuration information of the first cell to the terminal only when the terminal supports an asymmetric uplink carrier and downlink carrier configuration.

(2) In a second implementation, the BWP configuration information of the first cell may be used to configure a first downlink BWP, and the first downlink BWP belongs to the second frequency band. In a frequency range of the first downlink BWP, a third frequency band used for downlink communication exists, but a third frequency band used for uplink communication does not exist.

The terminal may perform downlink communication with the network device on the first downlink BWP based on the BWP configuration information. Because the third frequency band used for uplink communication does not exist in the frequency range of the first downlink BWP, interference from uplink communication on the third frequency band to downlink communication of the terminal can be reduced. In addition, compared with an implementation in which it is constrained that neither the third frequency band used for uplink communication nor the third frequency band used for downlink communication can exist in the frequency range of the first downlink BWP, in the second implementation, the third frequency band used for downlink communication is allowed to exist in the frequency range of the first downlink BWP. This not only improves configuration flexibility of the first downlink BWP, but also may increase a bandwidth of the first downlink BWP, thereby improving spectrum utilization.

The BWP configuration information may be further used to configure a first uplink BWP, a BWP identifier (identifier, ID) of the first uplink BWP is the same as a BWP identifier of the first downlink BWP, and the first uplink BWP also belongs to the second frequency band. In a frequency range of the first uplink BWP, a third frequency band used for uplink communication exists, but a third frequency band used for downlink communication does not exist.

The terminal may perform uplink communication with the network device on the first uplink BWP based on the BWP configuration information. Because the third frequency band used for downlink communication does not exist in the frequency range of the first uplink BWP, interference from downlink communication on the third frequency band to uplink communication of the terminal can be reduced. In addition, compared with an implementation in which it is constrained that neither the third frequency band used for downlink communication nor the third frequency band used for uplink communication can exist in the frequency range of the first uplink BWP, in the second implementation, the third frequency band used for uplink communication is allowed to exist in the frequency range of the first uplink BWP. This not only improves configuration flexibility of the first uplink BWP, but also may increase a bandwidth of the first uplink BWP, thereby improving spectrum utilization.

For example, the first downlink BWP or the first uplink BWP may be an initial BWP (for example, the second initial BWP of the second cell or the initial BWP of the first cell in the foregoing embodiment), and the BWP configuration information may be carried in system information (for example, a SIB1). The first downlink BWP or the first uplink BWP may be a non-initial BWP (or referred to as a dedicated BWP), and the BWP configuration information may be carried in an RRC message.

As shown in FIG. 3, center frequencies and/or bandwidths of the first uplink BWP and the first downlink BWP may be different. In other words, the first uplink BWP and the first downlink BWP are asymmetric uplink BWP and downlink BWP. In this implementation, when configuring an uplink BWP and a downlink BWP for the terminal, the network device no longer needs to ensure that an uplink BWP and a downlink BWP that have a same BWP identifier have a same center frequency and/or bandwidth, thereby improving BWP configuration flexibility, especially BWP configuration flexibility on a TDD frequency band. This configuration flexibility helps improve spectrum resource utilization.

In the second implementation of this embodiment of this application, before the network device sends the BWP configuration information of the first cell to the terminal, the terminal may further send capability information to the network device, where the capability information indicates whether the terminal supports an asymmetric uplink BWP and downlink BWP configuration. The network device then determines, based on the capability information, whether to send the BWP configuration information of the first cell to the terminal. For example, the network device sends the BWP configuration information of the first cell to the terminal only when the terminal supports an asymmetric uplink BWP and downlink BWP configuration.

The first implementation and the second implementation in this embodiment of this application may be combined with each other. For example, the network device may first send the carrier configuration of the first cell to the terminal, and then send the BWP configuration of the first cell to the terminal.

In an embodiment of this application, the terminal may receive configuration information from the network device, where the configuration information is used to configure a first carrier and a second carrier. The configuration information may specifically include parameters used to configure a time domain resource and/or a frequency domain resource of a carrier, for example, parameters such as ssb-SubcarrierOffset, offsetToPointA, and offsetToCarrier (which may include offsetToDLCarrier and offsetToULCarrier). For ease of description, an information element name or a parameter name in this application is merely an example for description. An information element or a parameter in this application may be an existing information element or parameter, or may be generated by using an existing information element or parameter.

The first carrier is a carrier corresponding to the first cell, and the second carrier is a carrier corresponding to the second cell. The first carrier may be located on the first frequency band or the third frequency band in the foregoing embodiment, and the second carrier may be located on the second frequency band in the foregoing embodiment.

The terminal may obtain a starting frequency and a bandwidth of the first carrier and those of the second carrier by referring to a method in an existing 3rd Generation Partnership Project (3rd generation partnership project, 3GPP) standard.

For example, the terminal may first perform frequency scanning to obtain the center frequency of the first SSB, and obtain a carrier frequency f1 on which a lowest subcarrier of the first SSB is located. A cell associated with the first SSB is the first cell. The terminal obtains an ssb-SubcarrierOffset information element in master information block (master information block, MIB) information carried in the first SSB, where the ssb-SubcarrierOffset information element indicates an offset offset1 between the carrier frequency on which the lowest subcarrier of the first SSB is located and a reference location (reference location). The terminal may obtain a frequency f2 of the reference location based on f1 and the offset1. Then, the terminal determines a CORESET0 based on the first SSB, and receives DCI in the CORESET0, where the DCI indicates a time domain resource and/or a frequency domain resource carrying the SIB1. The terminal obtains the SIB1 based on the DCI, and obtains an offsetToPoint A information element in the SIB1, where the offsetToPoint A information element indicates an offset offset2 between the reference location and a point A. The terminal may obtain a frequency f3 of the point A based on f2 and the offset2. The point A may be a central location of a subcarrier 0 of a common resource block (common resource block, CRB) 0. The terminal obtains an offsetToCarrier information element in the SIB1, where the offsetToCarrier information element indicates an offset offset3 between the starting frequency of the first carrier and the point A. The terminal may obtain the starting frequency f4 of the first carrier based on f3 and the offset3. The terminal may further obtain a carrierBandwidth information element in the SIB1, where the information element indicates the bandwidth of the first carrier.

For example, if a unit of the offset2 is 1 RB of the first carrier, 1 RB includes 12 subcarriers, and a unit of the offset3 is a subcarrier spacing (SCS1) of the first carrier, f3 = f2 - offset2 × SCS1 × 12, and f4 = f3 + offset3 × SCS1.

Similarly, the terminal may obtain the starting frequency f5 of the second carrier according to the foregoing method, and the terminal may obtain a difference Z between the starting frequency of the second carrier and the starting frequency of the first carrier, that is, Z = f5 - f4.

In an implementation, Z needs to meet the following condition: When Z is greater than 0, Z is equal to a frequency resource size corresponding to an RBG size of the first carrier × n, where the frequency resource size corresponding to the RBG size of the first carrier is equal to the RBG size of the first carrier × a quantity of subcarriers included in 1 RB × the subcarrier spacing of the first carrier. When Z is less than 0, an absolute value of Z is equal to a frequency resource size corresponding to an RBG size of the second carrier × n, where the frequency resource size corresponding to the RBG size of the second carrier is equal to the RBG size of the second carrier × a quantity of subcarriers included in 1 RB × the subcarrier spacing of the second carrier. Z, the frequency resource size corresponding to the RBG size of the first carrier, and the frequency resource size corresponding to the RBG size of the second carrier may have a same unit, that is, hertz (hertz, Hz). n is a positive integer.

In this implementation, the first carrier and the second carrier are aligned at an RBG boundary of an overlapping part, so that generation of a resource fragment that cannot be used by both the first carrier and the second carrier is reduced, thereby reducing a resource waste or a user peak rate loss. In addition, the first carrier and the second carrier are aligned at the RBG boundary of the overlapping part, so that multi-user multiple-input multiple-output (multi-user multiple-input multiple-output, MU-MIMO) communication between a terminal using the first carrier and a terminal using the second carrier can also be supported, thereby further increasing a cell capacity. MU-MIMO means that a plurality of users may perform space division multiplexing on a time domain resource and/or a frequency domain resource during data transmission. For example, the network device may configure a terminal using the first carrier and a terminal using the second carrier to perform space division multiplexing on a resource at an overlapping part between the first carrier and the second carrier, so as to implement MU-MIMO and increase a cell capacity.

In another implementation, Z needs to meet the following condition: When Z is greater than 0, Z is equal to the frequency resource size corresponding to the RBG size of the first carrier × X + Y × a frequency resource size corresponding to an RB of the first carrier, where the frequency resource size corresponding to the RB of the first carrier is equal to a quantity of subcarriers included in 1 RB of the first carrier × the subcarrier spacing of the first carrier. When Z is less than 0, an absolute value of Z is equal to the frequency resource size corresponding to the RBG size of the second carrier × X + Y × a frequency resource size corresponding to an RB of the second carrier, where the frequency resource size corresponding to the RB of the second carrier is equal to a quantity of subcarriers included in 1 RB of the second carrier × the subcarrier spacing of the second carrier. X and Y are positive integers. For example, a minimum value of Y is 1, and a maximum value thereof is a quantity of RBs included at the overlapping part between the first carrier and the second carrier. A typical value of Y may be 2.

In this implementation, in the overlapping part between the first carrier and the second carrier, an RBG boundary of the first carrier and an RBG boundary of the second carrier can be separated by Y RBs, thereby reducing interference caused because the subcarrier spacing of the first carrier is not orthogonal to the subcarrier spacing of the second carrier at the overlapping part (for example, the SCSs of the first carrier and the second carrier are different).

For example, the first carrier is located in the n7 frequency band, the second carrier is located in the n41 frequency band, and 1 RB includes 12 subcarriers. It is assumed that the SCS of the first carrier is equal to SCS1, the SCS of the second carrier is equal to SCS2, the RBG size of the first carrier is equal to RBG1, the RBG size of the second carrier is equal to RBG2, and a difference between the starting frequency of the second carrier and the starting frequency of the first carrier is equal to Z, where Z, SCS1, and SCS2 are all in a unit of hertz (hertz, Hz).

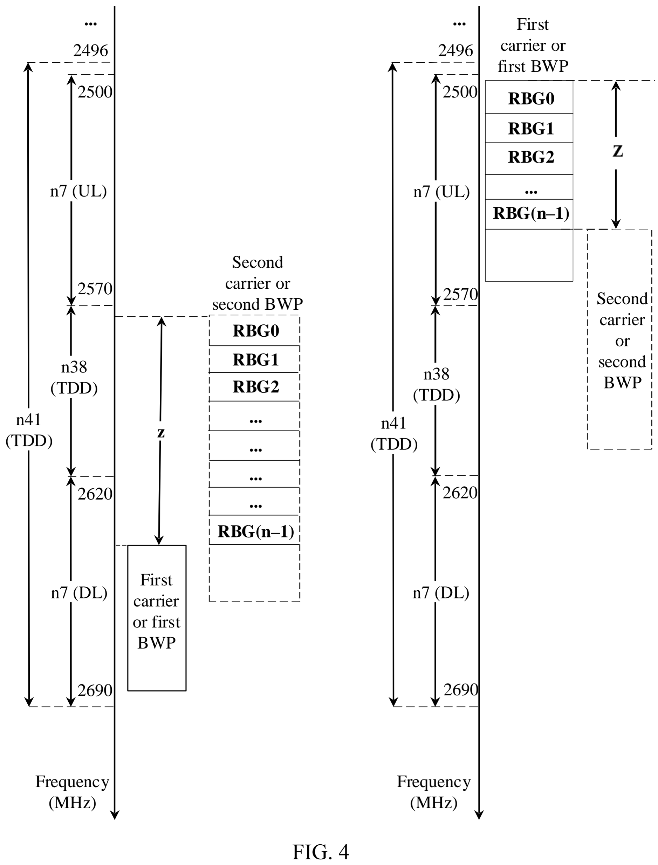

In an implementation, for example, as shown in the left figure in FIG. 4, the starting frequency of the second carrier is lower than the starting frequency of the first carrier. In this case, Z is less than 0, and Z needs to meet: -Z = n × RBG2 × 12 × SCS2.

As shown in the right figure in FIG. 4, the starting frequency of the second carrier is higher than the starting frequency of the first carrier. In this case, Z is greater than 0, and Z needs to meet: Z = n × RBG1 × 12 × SCS1.

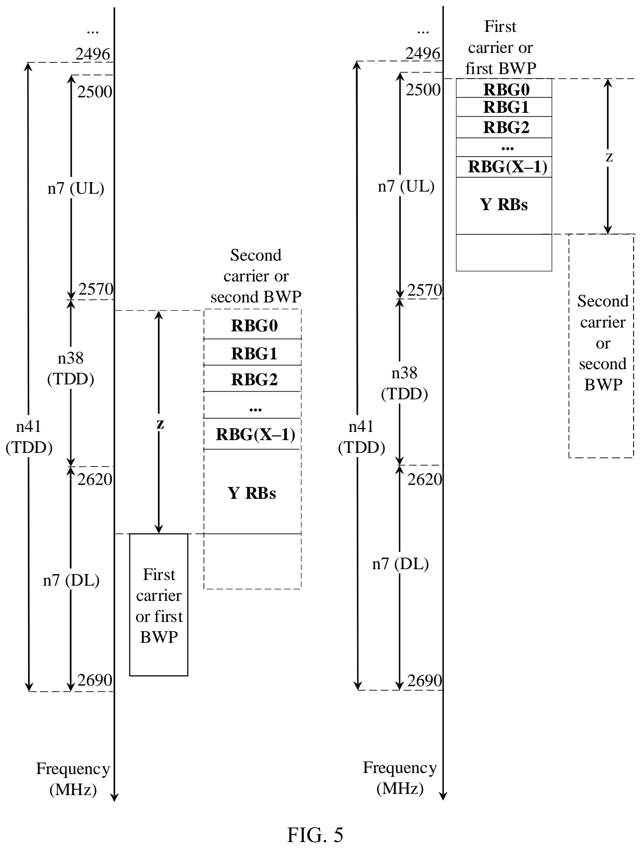

In another implementation, for example, as shown in the left figure in FIG. 5, the starting frequency of the second carrier is lower than the starting frequency of the first carrier. In this case, Z is less than 0, and Z needs to meet: -Z = (X × RBG2 + Y) × 12 × SCS2.

As shown in the right figure in FIG. 5, the starting frequency of the second carrier is higher than the starting frequency of the first carrier. In this case, Z is greater than 0, and Z needs to meet: Z = (X × RBG1 + Y) × 12 × SCS1.

In this embodiment of this application, the carrier is used as an example for description. For the BWP, the "carrier" in this embodiment of this application may be replaced with the "BWP" for understanding. Details are not described again. The terminal may also obtain the starting frequency and the bandwidth of the BWP by referring to a method in an existing 3GPP standard. For example, after obtaining the starting frequency and the bandwidth of the carrier, the terminal may continue to obtain a locationAndBandwidth information element in the SIB1. The locationAndBandwidth information element indicates an offset between the starting frequency of the BWP and the starting frequency of the carrier, and the bandwidth of the BWP.

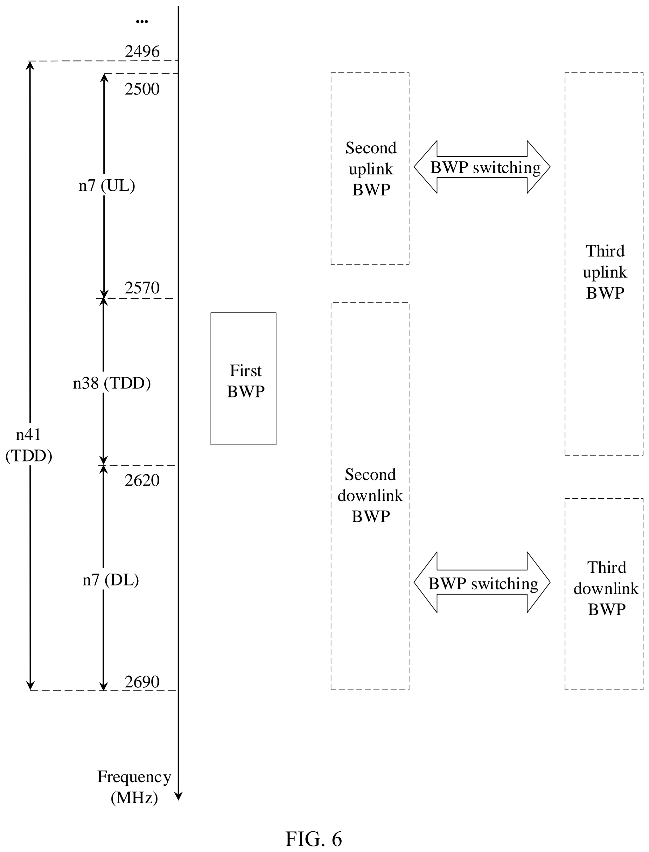

In an embodiment of this application, a first BWP of the first cell may be located on the first frequency band in the foregoing embodiment, and a second downlink BWP or a second uplink BWP of the second cell may be located on the second frequency band in the foregoing embodiment. The first BWP and the second downlink BWP or the second uplink BWP overlap in frequency domain. Both the first frequency band and the second frequency band are TDD frequency bands. As shown in FIG. 6, the first frequency band may be an n38 frequency band, and the second frequency band may be a n41 frequency band.

The first BWP and the second downlink BWP may be deployed by different operators. To be specific, the first cell and the second cell may belong to different operators. In this case, uplink-downlink configuration (uplink-downlink configuration) information of the first cell may be different from uplink-downlink configuration information of the second cell. When the uplink-downlink configuration information of the first cell is different from the uplink-downlink configuration information of the second cell, uplink-downlink interference may occur at an overlapping part between the first BWP and the second downlink BWP. For example, uplink transmission on the first BWP of the first cell and downlink transmission on the second downlink BWP of the second cell interfere with each other.

To reduce interference between uplink transmission of the first cell and downlink transmission of the second cell at the overlapping part between the first BWP and the second downlink BWP, in an implementation, the uplink-downlink configuration information of the first cell may be kept the same as the uplink-downlink configuration information of the second cell.

In another implementation, the network device can determine, based on the uplink-downlink configuration information of the first cell and the uplink-downlink configuration information of the second cell, to switch a downlink BWP of the second cell in a timely manner, thereby reducing interference between uplink transmission of the first cell and downlink transmission of the second cell. The network device may implement BWP switching of the terminal by sending downlink control information (downlink control information, DCI).

For example, when determining that the uplink-downlink configuration information of the first cell is different from the uplink-downlink configuration information of the second cell, the network device may switch the terminal from the second downlink BWP of the second cell to a third downlink BWP of the second cell. The third downlink BWP of the second cell does not overlap the first BWP in frequency domain. Optionally, the network device may switch the terminal from the second downlink BWP of the second cell to the third downlink BWP of the second cell before an uplink transmission time unit (for example, an uplink transmission slot or an uplink transmission subframe) in the first BWP. For example, the network device may switch the terminal from the second downlink BWP of the second cell to the third downlink BWP of the second cell before a 1^{st} uplink transmission time unit in the first BWP. Alternatively, the network device may switch the terminal from the second downlink BWP of the second cell to the third downlink BWP of the second cell after a last downlink transmission time unit in the first BWP. Alternatively, the network device may switch the terminal from the second downlink BWP of the second cell to the third downlink BWP of the second cell in a transition time unit (for example, a special slot or a special subframe) from downlink to uplink in a time unit in the first BWP.

Because the third downlink BWP of the second cell does not overlap the first BWP in frequency domain, interference between uplink transmission of the first cell and downlink transmission of the second cell can be reduced.

After the terminal is switched from the second downlink BWP of the second cell to the third downlink BWP of the second cell, the network device may further determine, based on the uplink-downlink configuration information of the first cell and the uplink-downlink configuration information of the second cell, to switch the downlink BWP of the second cell in a timely manner, to increase a capacity of the second cell.

For example, the network device may switch the terminal from the third downlink BWP of the second cell to the second downlink BWP of the second cell before a downlink transmission time unit (for example, a downlink transmission slot or a downlink transmission subframe) in the first BWP. For example, the network device may switch the terminal from the third downlink BWP of the second cell to the second downlink BWP of the second cell before a 1^{st} downlink transmission time unit in the first BWP. Alternatively, the network device may switch the terminal from the third downlink BWP of the second cell to the second downlink BWP of the second cell after a last uplink transmission time unit in the first BWP. Alternatively, the network device may switch the terminal from the third downlink BWP of the second cell to the second downlink BWP of the second cell in a transition time unit (for example, a special slot or a special subframe) from uplink to downlink in a time unit in the first BWP.

Similarly, a third uplink BWP of the second cell may also overlap the first BWP in frequency domain. When the uplink-downlink configuration information of the first cell is different from the uplink-downlink configuration information of the second cell, uplink-downlink interference also occurs at an overlapping part between the first BWP and the third uplink BWP. For example, downlink transmission on the first BWP of the first cell and uplink transmission on the third uplink BWP of the second cell interfere with each other.

To reduce interference between downlink transmission of the first cell and uplink transmission of the second cell at the overlapping part between the first BWP and the third uplink BWP, in an implementation, the uplink-downlink configuration information of the first cell may be kept the same as the uplink-downlink configuration information of the second cell.

In another implementation, the network device may determine, based on the uplink-downlink configuration information of the first cell and the uplink-downlink configuration information of the second cell, to switch an uplink BWP of the second cell in a timely manner, thereby reducing interference between downlink transmission of the first cell and uplink transmission of the second cell.

For example, when determining that the uplink-downlink configuration information of the first cell is different from the uplink-downlink configuration information of the second cell, the network device may switch the terminal from the third uplink BWP of the second cell to the second uplink BWP of the second cell. The second uplink BWP of the second cell does not overlap the first BWP in frequency domain. Optionally, the network device may switch the terminal from the third uplink BWP of the second cell to the second uplink BWP of the second cell before a downlink transmission time unit (for example, a downlink transmission slot or a downlink transmission subframe) in the first BWP. For example, the network device may switch the terminal from the third uplink BWP of the second cell to the second uplink BWP of the second cell before a 1^{st} downlink transmission time unit in the first BWP. Alternatively, the network device may switch the terminal from the third uplink BWP of the second cell to the second uplink BWP of the second cell after a last uplink transmission time unit in the first BWP. Alternatively, the network device may switch the terminal from the third uplink BWP of the second cell to the second uplink BWP of the second cell in a transition time unit (for example, a special slot or a special subframe) from uplink to downlink in a time unit in the first BWP.

Because the second uplink BWP of the second cell does not overlap the first BWP in frequency domain, interference between downlink transmission of the first cell and uplink transmission of the second cell can be reduced.

After the terminal is switched from the third uplink BWP of the second cell to the second uplink BWP of the second cell, the network device may further determine, based on the uplink-downlink configuration information of the first cell and the uplink-downlink configuration information of the second cell, to switch the uplink BWP of the second cell in a timely manner, to increase a throughput of the second cell.

For example, the network device may switch the terminal from the second uplink BWP of the second cell to the third uplink BWP of the second cell before an uplink transmission time unit (for example, an uplink transmission slot or an uplink transmission subframe) in the first BWP. For example, the network device may switch the terminal from the second uplink BWP of the second cell to the third uplink BWP of the second cell before a 1^{st} uplink transmission time unit in the first BWP. Alternatively, the network device may switch the terminal from the second uplink BWP of the second cell to the third uplink BWP of the second cell after a last downlink transmission time unit in the first BWP. Alternatively, the network device may switch the terminal from the second uplink BWP of the second cell to the third uplink BWP of the second cell in a transition time unit (for example, a special slot or a special subframe) from downlink to uplink in a time unit in the first BWP.

In an optional implementation of this embodiment of this application, uplink BWP switching and downlink BWP switching of the terminal may be associated with each other. For example, it may be specified that an uplink BWP and a downlink BWP that have a same BWP ID are simultaneously or sequentially switched. For example, when switching the terminal from the second downlink BWP of the second cell to the third downlink BWP of the second cell, the network device may also switch the terminal from the third uplink BWP of the second cell to the second uplink BWP of the second cell. Alternatively, when switching the terminal from the second uplink BWP of the second cell to the third uplink BWP of the second cell, the network device may switch the terminal from the third downlink BWP of the second cell to the second downlink BWP of the second cell. In this implementation, after uplink BWP switching or downlink BWP switching is performed on the terminal, a sum of uplink and downlink bandwidths does not change greatly, so that a sum of uplink and downlink throughputs of a cell can be stabilized.

In an embodiment of this application, the first carrier corresponding to the first cell belongs to the first frequency band, and the second carrier corresponding to the second cell belongs to the second frequency band. The first frequency band and the second frequency band have an overlapping part. Because the first carrier and the second carrier have an overlapping part, a resource conflict may occur between a physical downlink control channel (physical downlink control channel, PDCCH) of the first cell located on the first carrier and a PDCCH of the second cell located on the second carrier, for example, overlapping in frequency domain. To reduce the foregoing conflict, in an implementation, the network device may configure that the PDCCH of the first cell is not located at the overlapping part between the first carrier and the second carrier. For example, it is configured that the PDCCH of the first cell is not located at the overlapping part between the first frequency band and the second frequency band.

In another implementation, if the PDCCH of the first cell and the PDCCH of the second cell have an overlapping part in frequency domain, the network device may configure the PDCCH of the first cell and the PDCCH of the second cell to coexist at the overlapping part in a non-frequency division multiplexing manner (for example, a time division multiplexing manner or a space division multiplexing manner). For example, when scheduling the PDCCH of the first cell, the network device does not schedule the PDCCH of the second cell.

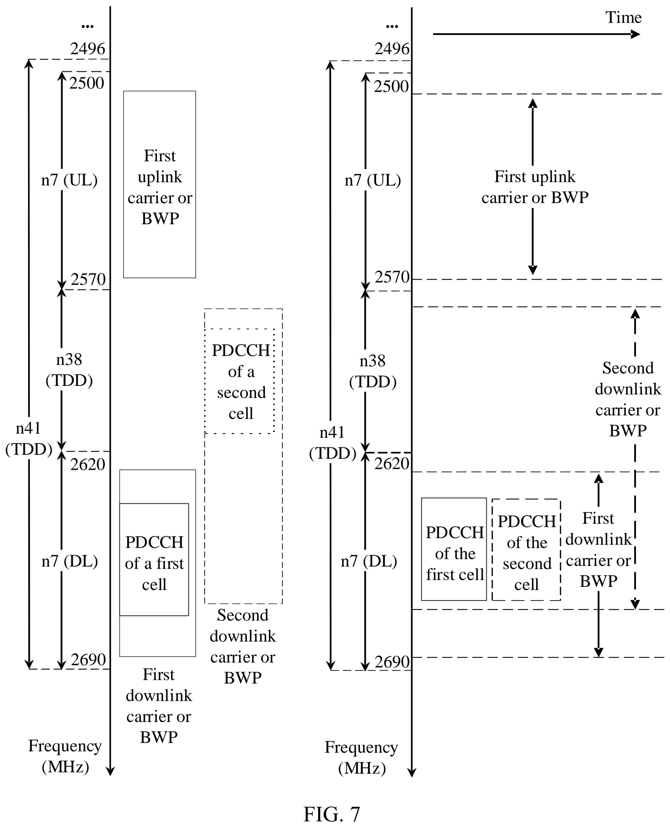

The first frequency band may be an n7 frequency band or an n38 frequency band, and the second frequency band may be an n41 frequency band. For example, the first frequency band is the n7 frequency band, and the second frequency band is the n41 frequency band. As shown in the left figure in FIG. 7, the network device may configure that the PDCCH of the first cell is not located on the n7 frequency band. As shown in the right figure in FIG. 7, even if the PDCCH of the first cell and the PDCCH of the second cell have an overlapping part in frequency domain, the network device may configure the PDCCH of the first cell and the PDCCH of the second cell to coexist at the overlapping part in a time division multiplexing manner.

In this embodiment of this application, the carrier is used as an example for description. For the BWP, the "carrier" in this embodiment of this application may be replaced with the "BWP" for understanding. Details are not described again.

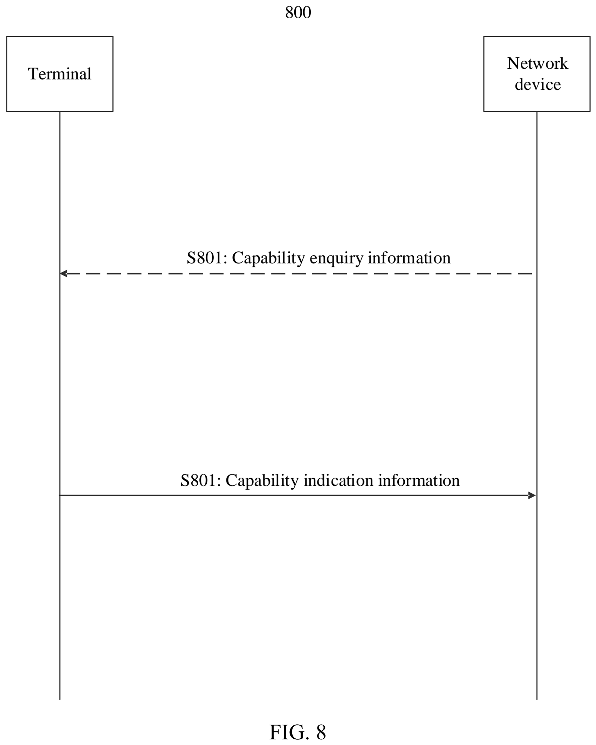

As shown in FIG. 8, a method 800 provided in an embodiment of this application may include the following steps.

S801: A terminal sends capability information to a network device.

The capability information indicates that the terminal supports carrier aggregation (carrier aggregation, CA) of a first frequency band and a third frequency band. The capability information may include a frequency band combination (band combination). The frequency band combination includes the first frequency band and the third frequency band. Carrier aggregation of the first frequency band and the third frequency band is also referred to as inter-band carrier aggregation (inter-band CA). The capability information may be specifically carried in a UECapabilityInformation message.

A terminal supporting carrier aggregation of the first frequency band and the third frequency band may include a terminal supporting the first frequency band and/or the third frequency band.

Before S801, the method 800 may further include S802: The network device sends capability enquiry information to the terminal.

The capability enquiry information indicates the terminal to send the capability information to the network device. The capability enquiry information may be specifically carried in a UECapabilityEnquiry message.

According to this embodiment of this application, a second frequency band can be used in a manner of inter-band carrier aggregation, where the second frequency band and the first frequency band have an overlapping part. The second frequency band and the third frequency band may also have an overlapping part. For example, when a network operator is authorized to use only the first frequency band and the third frequency band, but is not authorized to use the second frequency band, because there are not many terminals supporting the first frequency band, resource utilization of the first frequency band is low. The network device configures the terminal to perform carrier aggregation on the first frequency band and the third frequency band, so that the third frequency band can be used, thereby improving resource utilization of the first frequency band.

If the first frequency band is a TDD frequency band, the third frequency band is an FDD frequency band, and the first frequency band is located between an uplink part and a downlink part of the third frequency band, when the terminal performs inter-band carrier aggregation, uplink-downlink interference may occur between adjacent frequency bands. For example, downlink transmission on the downlink part of the third frequency band may cause interference to uplink transmission on the first frequency band. Uplink transmission on the uplink part of the third frequency band may cause interference to downlink transmission on the first frequency band.

In an embodiment provided in this application, when the network device configures the terminal to perform uplink transmission on the first frequency band and the third frequency band in the carrier aggregation manner, the network device does not configure (or prohibits) configuring the terminal to perform downlink transmission on the downlink part of the third frequency band. Similarly, when the network device configures the terminal to perform downlink transmission on the first frequency band and the third frequency band in the carrier aggregation manner, the network device does not configure (or prohibits) configuring the terminal to perform uplink transmission on the uplink part of the third frequency band.

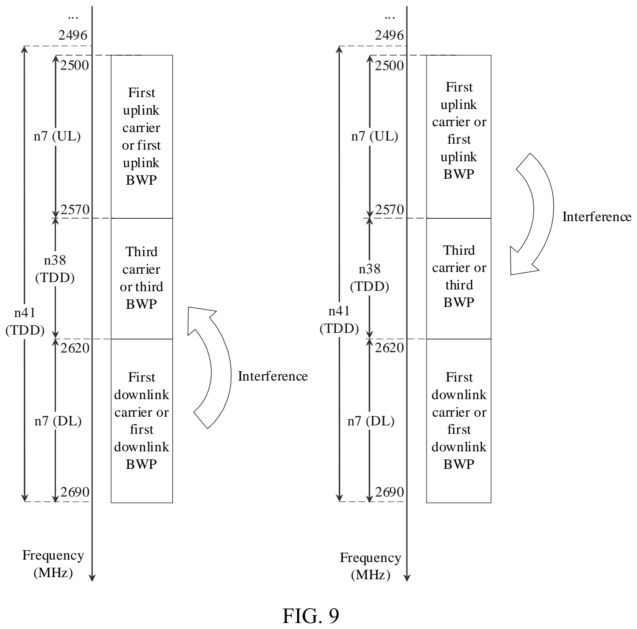

For example, the first frequency band is an n7 frequency band, and the third frequency band is an n38 frequency band. As shown in the left figure in FIG. 9, when the network device configures the terminal to perform uplink transmission on a first uplink carrier and a third carrier in the carrier aggregation manner, the network device does not configure the terminal to perform downlink transmission on a first downlink carrier, so that interference caused by downlink transmission performed by the terminal on the first downlink carrier to uplink transmission of the terminal can be reduced. As shown in the right figure in FIG. 9, when the network device configures the terminal to perform downlink transmission on the first downlink carrier and the third carrier in the carrier aggregation manner, the network device does not configure the terminal to perform uplink transmission on the first uplink carrier, so that interference caused by uplink transmission performed by the terminal on the first uplink carrier to downlink transmission of the terminal can be reduced.

In this embodiment of this application, the carrier is used as an example for description. For the BWP, the "carrier" in this embodiment of this application may be replaced with the "BWP" for understanding. Details are not described again.

In the method provided in this embodiment of this application, a configuration behavior of the network device is limited, so that uplink-downlink interference that may be caused between adjacent frequency bands when the terminal performs inter-band carrier aggregation can be reduced.

Based on the foregoing similar technical concept, embodiments of this application provide a communication apparatus. The communication apparatus may be the terminal or a chip in the terminal in any possible design solution of the methods in the foregoing embodiments. The communication apparatus includes at least one corresponding unit that is in the communication methods provided in the foregoing embodiments and that is configured to perform the method step, the operation, or the behavior performed by the terminal. The at least one unit may be disposed in one-to-one correspondence with the method step, the operation, or the behavior performed by the terminal. These units may be implemented by using a computer program, may be implemented by using a hardware circuit, or may be implemented by using a computer program in combination with a hardware circuit.

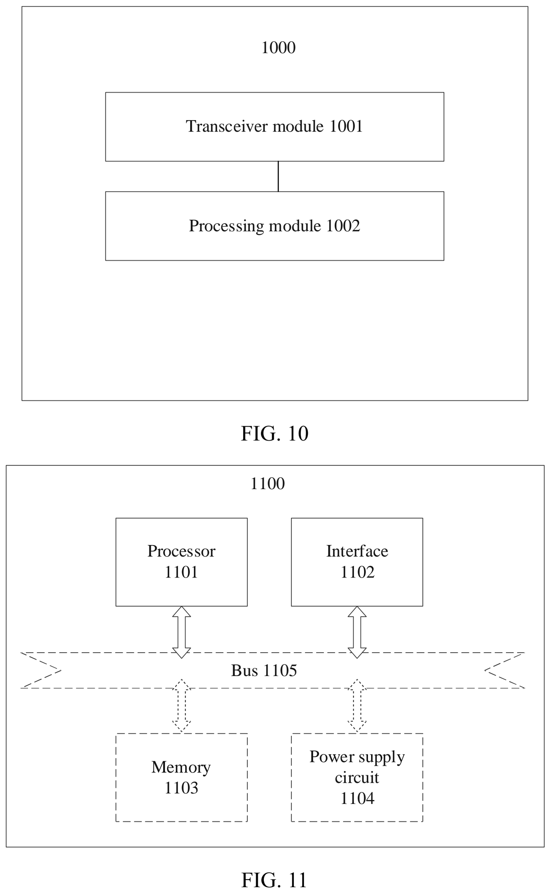

With reference to FIG. 10, the following describes a communication apparatus 1000 provided in this application. The communication apparatus 1000 may be configured to implement functions of the terminal or the network device in the foregoing method embodiments, and therefore can also implement beneficial effects of the foregoing method embodiments. The communication apparatus 1000 may be applied to a terminal, a chip in the terminal, a network device, or a chip in the network device. The following describes in detail a structure and a function of the communication apparatus 1000 in different designs. Although names of modules in different designs are the same, structures and functions may be different.

As shown in FIG. 10, the communication apparatus 1000 includes a transceiver module 1001 and a processing module 1002. The communication apparatus 1000 is configured to implement functions of the terminal or the network device in the method embodiments corresponding to FIG. 2 to FIG. 9.

When the communication apparatus 1000 is configured to implement the functions of the terminal in the method embodiment shown in FIG. 2, the transceiver module 1001 is configured to receive a first SSB, where the first SSB is located at an overlapping part between a first frequency band and a second frequency band. The first SSB indicates a first time-frequency resource of a first cell, and the first time-frequency resource is located at the overlapping part between the first frequency band and the second frequency band. The processing module 1002 is configured to enable the transceiver module 1001 to obtain indication information based on the first time-frequency resource, where the indication information indicates that a carrier corresponding to the first cell belongs to the first frequency band and the second frequency band.

In a possible design, the transceiver module 1001 specifically receives DCI on the first time-frequency resource, where the DCI indicates a time domain resource and/or a frequency domain resource carrying system information of the first cell. The processing module 1002 enables the transceiver module 1001 to obtain the system information based on the DCI, where the system information includes the indication information.

In a possible design, the processing module 1002 may be further configured to obtain an initial BWP of the first cell based on the first time-frequency resource, where the initial BWP is located at the overlapping part between the first frequency band and the second frequency band.

In a possible design, the processing module 1002 may be further configured to access the first cell based on the indication information.

In a possible design, the indication information includes a frequency band list, and the frequency band list includes the first frequency band and the second frequency band. The processing module 1002 is specifically configured to determine a 1^{st} frequency band that the terminal is able to support in the frequency band list, and access the first cell through the 1^{st} frequency band that the terminal is able to support.

When the communication apparatus 1000 is configured to implement the functions of the terminal in the method embodiment shown in FIG. 3, the transceiver module 1001 is configured to receive BWP configuration information of a first cell from a network device, where the BWP configuration information is used to configure a first downlink BWP, and the first downlink BWP belongs to a second frequency band. In a frequency range of the first downlink BWP, a third frequency band used for downlink communication exists, but a third frequency band used for uplink communication does not exist, the second frequency band and the third frequency band have an overlapping part, the third frequency band is an FDD frequency band, and the second frequency band is a TDD frequency band.

In a possible design, the transceiver module 1001 is further configured to send capability information to the network device, where the capability information indicates that the terminal supports an asymmetric uplink BWP and downlink BWP configuration.

When the communication apparatus 1000 is configured to implement the functions of the terminal in the method embodiment shown in FIG. 4 or FIG. 5, the transceiver module 1001 is configured to receive configuration information from a network device, where the configuration information is used to configure a first carrier and a second carrier. When a difference between a starting frequency of the second carrier and a starting frequency of the first carrier is a positive value, the difference between the starting frequency of the second carrier and the starting frequency of the first carrier is equal to n times a frequency resource size corresponding to a resource block group (resource block group, RBG) size of the first carrier, where n is a positive integer; or the difference between the starting frequency of the second carrier and the starting frequency of the second carrier is equal to a sum of X times the frequency resource size corresponding to the RBG size of the first carrier and a frequency resource size corresponding to Y resource blocks (resource block, RB) of the first carrier, where X and Y are positive integers.

When the communication apparatus 1000 is configured to implement the functions of the terminal in the method embodiment shown in FIG. 8, the transceiver module 1001 is configured to send capability information to a network device, where the capability information indicates that the terminal supports CA on a first frequency band and a third frequency band.

When the communication apparatus 1000 is configured to implement the functions of the network device in the method embodiment shown in FIG. 2, the transceiver module 1001 is configured to send a first SSB, where the first SSB is located at an overlapping part between a first frequency band and a second frequency band. The first SSB indicates a first time-frequency resource of a first cell, and the first time-frequency resource is located at the overlapping part between the first frequency band and the second frequency band. The transceiver module 1001 is further configured to send, on the first time-frequency resource, information about a time domain resource and/or a frequency domain resource carrying indication information. The indication information indicates that a carrier corresponding to the first cell belongs to the first frequency band and the second frequency band.

In a possible design, the transceiver module 1001 is specifically configured to send DCI on the first time-frequency resource, where the DCI indicates a time domain resource and/or a frequency domain resource carrying system information of the first cell, and the system information includes the indication information.

In a possible design, the transceiver module 1001 is further configured to send, on the first time-frequency resource, information about a time domain resource and/or a frequency domain resource carrying configuration information of an initial BWP of the first cell, where the initial BWP is located at the overlapping part between the first frequency band and the second frequency band.

When the communication apparatus 1000 is configured to implement the functions of the network device in the method embodiment shown in FIG. 3, the transceiver module 1001 is configured to send BWP configuration information of a first cell, where the BWP configuration information is used to configure a first downlink BWP, and the first downlink BWP belongs to a second frequency band. In a frequency range of the first downlink BWP, a third frequency band used for downlink communication exists, but a third frequency band used for uplink communication does not exist, the second frequency band and the third frequency band have an overlapping part, the third frequency band is a frequency division multiplexing FDD frequency band, and the second frequency band is a time division multiplexing TDD frequency band.

In a possible design, the transceiver module 1001 is configured to receive capability information from a terminal, where the capability information indicates that the terminal supports an asymmetric uplink BWP and downlink BWP configuration.

When the communication apparatus 1000 is configured to implement the functions of the network device in the method embodiment shown in FIG. 4 or FIG. 5, the transceiver module 1001 is configured to send configuration information, where the configuration information is used to configure a first carrier and a second carrier. When a difference between a starting frequency of the second carrier and a starting frequency of the first carrier is a positive value, the difference between the starting frequency of the second carrier and the starting frequency of the first carrier is equal to n times a frequency resource size corresponding to an RBG size of the first carrier, where n is a positive integer; or the difference between the starting frequency of the second carrier and the starting frequency of the second carrier is equal to a sum of X times the frequency resource size corresponding to the RBG size of the first carrier and a frequency resource size corresponding to Y RBs of the first carrier, where X and Y are positive integers.

When the communication apparatus 1000 is configured to implement the functions of the network device in the method embodiment shown in FIG. 6, the processing module 1002 is configured to switch a terminal from a second BWP to a third BWP based on uplink-downlink configuration information of a first cell and uplink-downlink configuration information of a second cell, where the second BWP and the third BWP belong to the second cell. The second BWP and a first BWP of the first cell have an overlapping part, the third BWP and the first BWP do not have an overlapping part, and the first BWP, the second BWP, and the third BWP are all located on a TDD frequency band.

When the communication apparatus 1000 is configured to implement the functions of the network device in the method embodiment shown in FIG. 7, the processing module 1002 is configured to configure a PDCCH of a first cell not to be located at an overlapping part between a first carrier and a second carrier, or configured to configure the PDCCH of the first cell and a PDCCH of a second cell to coexist at the overlapping part in a non-frequency division multiplexing manner (for example, a time division multiplexing manner or a space division multiplexing manner).

When the communication apparatus 1000 is configured to implement the functions of the network device in the method embodiment shown in FIG. 8, the transceiver module 1001 is configured to send capability enquiry information to a terminal, where the capability enquiry information indicates the terminal to send capability information to the network device, and the capability information indicates that the terminal supports CA on a first frequency band and a third frequency band.

When the communication apparatus 1000 is configured to implement the functions of the network device in the method embodiment shown in FIG. 9, the processing module 1002 is configured to: when configuring a terminal to perform uplink transmission on a first frequency band and a third frequency band in a carrier aggregation manner, prohibit configuring the terminal to perform downlink transmission on a downlink part of the third frequency band, or when configuring a terminal to perform downlink transmission on a first frequency band and a third frequency band in a carrier aggregation manner, prohibit configuring the terminal to perform uplink transmission on an uplink part of the third frequency band.

For more detailed descriptions of the communication apparatus 1000 and related definitions, refer to related descriptions in the method embodiments shown in FIG. 2 to FIG. 9.

In this application, the terminal is also sometimes referred to as user equipment (user equipment, UE), a mobile station, a terminal device, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. The terminal may include but is not limited to user equipment UE, a mobile station, a mobile device, a terminal device, a user agent, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device (for example, a smart watch, a smart band, or smart glasses), smart furniture or a home appliance, a vehicle device in vehicle to everything (vehicle to everything, V2X), a terminal device having a relay function, customer premises equipment (customer premises equipment, CPE), an integrated access and backhaul (integrated access and backhaul, IAB) node (which is specifically a mobile terminal (mobile terminal, MT) of the IAB node or an IAB node serving as a terminal), and the like. A specific name and an implementation form of the terminal are not limited in this application.

In this application, the network device may include but is not limited to a next generation NodeB (generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB or home NodeB), a transmission point (transmission and reception point or transmission point), a road side unit (road side unit, RSU) having a base station function, a baseband unit (baseband unit, BBU), a remote radio unit (Remote Radio Unit, RRU), an active antenna unit (active antenna unit, AAU), one antenna panel or a group of antenna panels, a node having a base station function in a subsequent evolved system, or the like. The network device may be an entity, and may further include a central unit (central unit, CU) entity and at least one distributed unit (distributed unit, DU) entity. An interface between the CU and the DU may be referred to as an F1 interface. Two ends of the F1 interface are respectively the CU and the DU. A peer end of the F1 interface of the CU is the DU, and a peer end of the F1 interface of the DU is the CU. The F1 interface may further include an F1 interface control plane (F1-C) and an F1 interface user plane (F1-U). The network device may alternatively be a device in an open radio access network (open radio access network, O-RAN) architecture.

Based on the foregoing similar technical concept, embodiments of this application provide a communication system. The communication system may include a network device configured to perform any possible design solution in the methods in the foregoing embodiments and a terminal configured to perform any possible design solution in the methods in the foregoing embodiments. For example, the communication system may include the communication apparatus 1000 and a communication apparatus 1100.

It may be clearly understood by a person skilled in the art that, for the purpose of convenient and brief description, division of the foregoing functional modules is used as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In this application, it should be understood that the disclosed system, apparatus, and method may be implemented in another manner. For example, the described apparatus embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

As shown in FIG. 11, a communication apparatus 1100 includes one or more processors 1101, and optionally, further includes an interface 1102. When related program instructions are executed in the at least one processor 1101, the apparatus 1100 may be enabled to implement the communication method provided in any one of the foregoing embodiments and any possible design thereof. The processor 1101 may alternatively implement, through a logic circuit, the communication method provided in any one of the foregoing embodiments and any possible design thereof. The interface 1102 may be configured to: receive the program instructions and transmit the program instructions to the processor 1101. Alternatively, the interface 1102 may be configured to: perform communication interaction between the apparatus 1100 and another communication device, for example, exchange control signaling and/or service data. For example, the interface 1102 may be configured to: receive a signal from another apparatus different from the apparatus 1100, and transmit the signal to the processor 1101; or send a signal from the processor 1101 to another communication apparatus different from the apparatus 1100. The interface 1102 may be a code and/or data read/write interface circuit, or the interface 1102 may be a signal transmission interface circuit between a communication processor and a transceiver, or a pin of a chip. Optionally, the communication apparatus 1100 may further include at least one memory 1103, and the memory 1103 may be configured to store the related program instructions and/or data that are/is required. Optionally, the apparatus 1100 may further include a power supply circuit 1104. The power supply circuit 1104 may be configured to supply power to the processor 1101. The power supply circuit 1104 may be located in a same chip as the processor 1101, or the power supply circuit 1104 may be located in a chip other than a chip in which the processor 1101 is located. Optionally, the apparatus 1100 may further include a bus 1105, and parts in the apparatus 1100 may be interconnected through the bus 1105.

It should be understood that the processor in this application includes but is not limited to at least one of the following: a central processing unit (central processing unit, CPU), a general-purpose processor, a microcontroller unit (microcontroller unit, MCU), an artificial intelligence (artificial intelligence, AI) processor, a digital signal processor (digital signal processor, DSP), an application-specific integrated circuit (application-specific integrated circuit, ASIC), a field programmable gate array (field programmable gate array, FPGA), a complex programmable logic device (complex programmable logic device, CPLD) or another programmable logic device (programmable logic device, PLD), a discrete gate or transistor logic device, a discrete hardware component, or the like. The general-purpose processor may be a microprocessor, or the processor may be any conventional processor or the like. In some other embodiments, the processor may further include a circuit that has another processing function (for example, a hardware circuit, a bus, and an interface that are for hardware acceleration). The processor may be presented in a form of an integrated chip. For example, the processor may be presented in a form of an integrated chip whose processing function includes only a function of executing software instructions; or the processor may be presented in a form of a system-on-a-chip (system-on-a-chip, SoC). To be specific, on one chip, in addition to the processing circuit (which is usually referred to as a "core") that can execute the program instructions, another hardware circuit configured to implement a specific function is further included (where certainly, the hardware circuit may also be independently implemented based on an ASIC or an FPGA). Correspondingly, in addition to the function of executing software instructions, processing functions may further include various hardware acceleration functions (such as AI computing, encoding and decoding, and compression and decompression). This chip is also referred to as a system on a programmable chip (system on a programmable chip, SoPC).

It should be further understood that the memory in this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The power supply circuit in embodiments of this application includes but is not limited to at least one of the following: a power supply line, a power supply subsystem, a power management chip, a power consumption management processor, or a power consumption management control circuit.

The interface in embodiments of this application may include a separate transmitter and/or a separate receiver, or the transmitter and the receiver may be integrated. The interface may operate under an indication of a corresponding processor. Optionally, the transmitter may correspond to a transmitter machine in a physical device, and the receiver may correspond to a receiver machine in the physical device.

A person of ordinary skill in the art may be aware that, in combination with examples described in embodiments disclosed in this specification, units or algorithm operations may be implemented by hardware, software, or a combination of software and hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be noted that, when this application is implemented by software, hardware, or a combination of software and hardware, this application may be implemented by different software and hardware, and is not limited to being implemented only by one type of software or hardware. For example, one of the modules or units may be implemented through the CPU, and another module or unit may be implemented through the DSP. Similarly, when hardware is used for implementation, one of the modules or units may be implemented by using the ASIC, and another module or unit may be implemented by using the FPGA. Certainly, it is also not specified that some or all modules or units are implemented by using a same type of software (for example, through the CPU) or a same type of hardware (for example, through the ASIC). In addition, a person skilled in the art may know that, software usually has better flexibility but poorer performance than hardware, and hardware is exactly opposite. Therefore, a person skilled in the art may select software, hardware, or a combination thereof for implementation based on an actual requirement.

In this application, the units described as separate parts may or may not be physically separate, and parts displayed as units may or may not be physical units, that is, may be located in one position, or may be distributed on a plurality of network elements. A person skilled in the art may select some or all of the units according to actual requirements to achieve the objectives of the solutions in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or a part of the technical solutions may be implemented in the form of a software product. The computer software product is stored in a storage medium and may include several instructions for instructing a computer device, for example, a personal computer, a server, or a network device, or a processor to perform all or a part of the operations of the methods in embodiments of this application. The foregoing storage medium may include: any medium that can store program code, such as a USB flash drive, a removable hard disk, a ROM, a RAM, a magnetic disk, or an optical disc, or a computer-readable storage medium.

In the foregoing embodiments, the description of each embodiment has respective focuses. For a part that is not described in detail in an embodiment, reference may be made to related descriptions in other embodiments. Embodiments of this application may be combined, or some technical features in embodiments may be decoupled from specific embodiments and combined with a conventional technology, to resolve the technical problem in embodiments of this application.

In descriptions of this application, terms such as "first", "second", "S201", or "S202" are merely used for distinguishing and description and for ease of organizing this article. Different sequences or numbers do not have specific technical meanings, and cannot be understood as indicating or implying relative importance, or indicating or implying an execution sequence of operations.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In descriptions of this application, unless otherwise specified, a quantity of nouns indicates "a singular noun or a plural noun", that is, "one or more". "At least one" indicates one or more. "At least one of the following: A, B, and C is included" indicates that A may be included, B may be included, C may be included, A and B may be included, A and C may be included, B and C may be included, or A, B, and C may be included. A, B, and C may be singular or plural.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
receiving a first synchronization signal and physical broadcast channel block SSB, wherein the first SSB is located at an overlapping part between a first frequency band and a second frequency band, the first SSB indicates a first time-frequency resource of a first cell, and the first time-frequency resource is located at the overlapping part between the first frequency band and the second frequency band; and
obtaining indication information based on the first time-frequency resource, wherein the indication information indicates that a carrier corresponding to the first cell belongs to the first frequency band and the second frequency band.

2. The method according to claim 1, wherein obtaining the indication information based on the first time-frequency resource comprises:
receiving downlink control information DCI on the first time-frequency resource, wherein the DCI indicates a time domain resource and/or a frequency domain resource carrying system information of the first cell; and
obtaining the system information based on the DCI, wherein the system information comprises the indication information.

3. The method according to claim 1 or 2, further comprising:
obtaining an initial bandwidth part BWP of the first cell based on the first time-frequency resource, wherein the initial BWP is located at the overlapping part between the first frequency band and the second frequency band.

4. The method according to any one of claims 1 to 3, further comprising:
accessing the first cell based on the indication information.

5. The method according to claim 4, wherein the indication information comprises a frequency band list, and the frequency band list comprises the first frequency band and the second frequency band; and
accessing the first cell based on the indication information comprises:
determining a 1^{st} frequency band that a terminal is able to support in the frequency band list, and accessing the first cell through the 1^{st} frequency band that the terminal is able to support.

6. The method according to any one of claims 1 to 5, wherein the first time-frequency resource comprises a first control resource set CORESET.

7. The method according to any one of claims 1 to 6, wherein the first frequency band is an n38 frequency band or an n7 frequency band, and the second frequency band is an n41 frequency band.

8. A communication method, comprising:
sending a first synchronization signal and physical broadcast channel block SSB, wherein the first SSB is located at an overlapping part between a first frequency band and a second frequency band, the first SSB indicates a first time-frequency resource of a first cell, and the first time-frequency resource is located at the overlapping part between the first frequency band and the second frequency band; and
sending, on the first time-frequency resource, information about a time domain resource and/or a frequency domain resource carrying indication information, wherein the indication information indicates that a carrier corresponding to the first cell belongs to the first frequency band and the second frequency band.

9. The method according to claim 8, wherein sending, on the first time-frequency resource, the information about the time domain resource and/or the frequency domain resource carrying the indication information comprises:
sending downlink control information DCI on the first time-frequency resource, wherein the DCI indicates a time domain resource and/or a frequency domain resource carrying system information of the first cell, and the system information comprises the indication information.

10. The method according to claim 8 or 9, further comprising:
sending, on the first time-frequency resource, information about a time domain resource and/or a frequency domain resource carrying configuration information of an initial bandwidth part BWP of the first cell, wherein the initial BWP is located at the overlapping part between the first frequency band and the second frequency band.

11. The method according to any one of claims 8 to 10, wherein the indication information comprises a frequency band list, and the frequency band list comprises the first frequency band and the second frequency band.

12. The method according to any one of claims 8 to 11, wherein the first frequency band is an n38 frequency band or an n7 frequency band, and the second frequency band is an n41 frequency band.

13. A communication apparatus, comprising a processor and a memory, wherein the processor is coupled to the memory, the memory stores program code, and the processor executes the program code, so that the communication apparatus performs the method according to any one of claims 1 to 12.

14. A communication apparatus, comprising a processor and an interface, wherein the interface is configured to receive and/or send a signal, and the processor implements the method according to any one of claims 1 to 12 by using a logic circuit or code instructions.

15. A computer-readable storage medium, wherein the computer-readable storage medium stores computer program instructions; and when the computer program instructions are executed by a processor, the method according to any one of claims 1 to 12 is implemented.

16. A computer program product, wherein the computer program product comprises program instructions; and when the program instructions are executed by a processor, the method according to any one of claims 1 to 12 is implemented.
